(19) Europäisches Patentamt
European Patent Office
Office européen des brevets

(11) Veröffentlichungsnummer: **0 191 330**
**A1**

(12) # EUROPÄISCHE PATENTANMELDUNG

(21) Anmeldenummer: **86100857.1**

(22) Anmeldetag: **23.01.86**

(51) Int. Cl.[4]: **B 01 D 53/34**, B 01 J 12/00, F 01 N 3/10

(30) Priorität: **13.02.85 DE 3504812**

(43) Veröffentlichungstag der Anmeldung: **20.08.86 Patentblatt 86/34**

(84) Benannte Vertragsstaaten: **BE FR GB IT NL**

(71) Anmelder: **BROWN, BOVERI & CIE Aktiengesellschaft, Kallstadter Strasse 1, D-6800 Mannheim 31 (DE)**

(72) Erfinder: **Schmidt, Conrad, Dr. Dipl.-Phys., Wielandstrasse 2, D-6901 Gaiberg (DE)**

(74) Vertreter: **Kempe, Wolfgang, Dr. et al, c/o Brown, Boveri & Cie AG Postfach 351, D-6800 Mannheim 1 (DE)**

(54) **Verfahren zum Reinigen von Abgasen.**

(57) Aufgabe der Erfindung ist es, ein Verfahren aufzuzeigen, mit dem die Reinigung von schadstoffbeladenen Abgasen möglich ist. Erfindungsgemäß wird hierfür mindestens ein Plasmajet (1) verwendet, dem über eine Ringdüse (7) $H_2$, $N_2$, $O_2$ und/oder $NH_3$ zugeführt werden. Dieser Plasmajet (1) wird in einer Plasmaquelle (2) erzeugt, der ebenfalls $H_2$, $N_2$, $O_2$ und/oder $NH_3$ zugeführt wird.

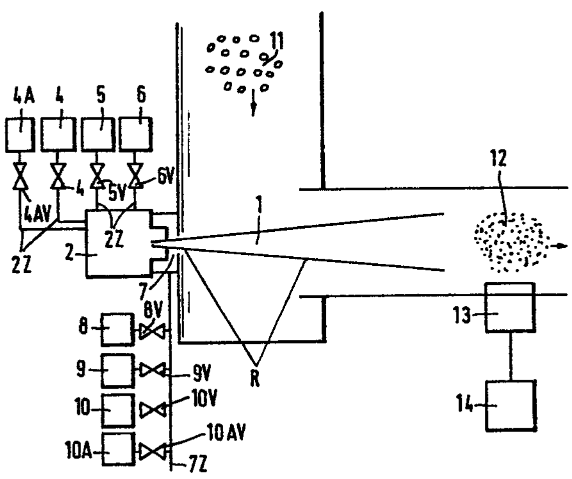


EP 0 191 330 A1

0191330

B R O W N, B O V E R I & C I E Aktiengesellschaft
Mannheim 05. 02. 1985
Mp.-Nr.503/85 ZPT/P1-Kr/Kn

Verfahren zum Reinigen von Abgasen

Die Erfindung bezieht sich auf ein Verfahren zum Reinigen von Abgasen gemäß dem Oberbegriff des Patentanspruches 1, sowie auf eine Vorrichtung zur Durchführung des Verfahrens.

Ein solches Verfahren zur Reinigung von Abgasen, insbesondere zur Abscheidung von $NO_x$ und $SO_2$ kann bei allen Abgasen verwendet werden, gleichgültig ob sie von einer Verbrennungsmaschine oder einer Verbrennungsanlage ausgeschieden werden. Unabhängig hiervon ist auch, welche Brennstoffe diesen Einrichtungen zugeführt werden.

Aus der Informationsschrift "Staub-Reinhaltung der Luft", Band 40 (1980), Nr. 4, Apr., Seiten 139 ff ist ein Nassverfahren zur $NO_x$ - Abscheidung beschrieben. In einem relativ aufwendigen ersten Verfahrensschritt wird NO mit Ozon oder einer alkalischen Permanganatlösung aufoxidiert. Nach der Absorbtion und der dann hauptsächlich vorliegenden höheren Oxidationsstufen erfolgen Regeneration der Waschflüssigkeit und der Abwasserbehandlung. Ein solches Verfahren ist vorwiegend zur Reinigung von Abgasen aus Salpetersäureanlagen konzipiert. Aus der gleichen Druckschrift (1980) Nr. 7 Juli ist ein Trocken-

verfahren zur ausschließlichen $NO_x$-Abscheidung bekannt. Trockenverfahren zur $NO_x$-Abscheidung beruhen in der Regel auf der Reduktion des $NO_x$ zu $N_2$ und $H_2O$, wobei als Reduktionsmittel insbesondere Ammoniak verwendet wird.

Ferner ist ein Verfahren zur Reinigung von Abgasen bekannt, das unter Verwendung von Elektronenstrahlen durchgeführt wird. Hierbei werden Rauchgaskomponenten ionisiert und/oder dissoziiert.

Die bis jetzt bekannt gewordenen Verfahren sind so ausgebildet, daß sie entweder die Abscheidung von $NO_x$ oder die Beseitigung von $SO_2$ erlauben.

Der Erfindung liegt die Aufgabe zugrunde ein Verfahren aufzuzeigen, mit dem auf einfache Weise sowohl die Abscheidung von $NO_x$ als auch die Beseitigung der $SO_2$-Anteile eines Abgases, gleichgültig aus welcher Anlage es stammt, ermöglicht wird.

Diese Aufgabe wird erfindungsgemäß durch die kennzeichnenden Merkmale des Patentanspruches 1 gelöst.

Eine Vorrichtung zur Durchführung des Verfahrens ist im Patentanspruch 5 offenbart.

Bei dem erfindungsgemäßen Verfahren wird die Reinigung des Abgases mit Hilfe eines Plasmastroms bzw. Plasmajets bewirkt. Erfindungsgemäß wird das zu reinigende Abgas in Abhängigkeit seiner Verunreinigungen der Reaktion mit einem Wasserstoffplasmajet, einem Sauerstoffplasmajet bzw. einem Stickstoffplasmajet ausgesetzt.

Weitere erfindungswesentliche Merkmale sind in den Unteransprüchen gekennzeichnet.

Das erfindungsgemäße Verfahren wird nachfolgend an einer Figur näher erläutert, in welcher die erfindungsgemäße Vorrichtung dargestellt ist. Die Durchführung des Verfahrens erfolgt mit Hilfe wenigstens eines Plasmastrahls bzw. eines Plasmajets 1, der in einer Plasmaquelle 2 erzeugt wird. Die Plasmaquelle 2 steht mit dem Innenraum eines Kanals 3 in Verbindung, durch welchen das zu reinigende Abgas 11 geführt wird. Die Plasmaquelle 2 ist über Zuleitungen 2Z und Ventile 4, 4AV, 5V und 6V an Vorratsbehälter 4,4A,5 und 6 für $O_2$,$H_2$,$N_2$ und $NH_3$ angeschlossen. In Strömungsrichtung des von der Plasmaquelle erzeugten Plasmajets 1 gesehen, ist eine Ringdüse 7 angeordnet. Diese steht über wenigstens eine Zuleitung 7Z und Ventile 8V,9V,10V und 10AV, mit Vorratsbehältern 8,9,10 und 10A für $O_2$,$H_2$,$N_2$ und $NH_3$ in Verbindung. Hinter der Reaktionszone R des Plasmajets 1, in Strömungsrichtung gesehen, ist innerhalb des Kanals 3 eine Meßvorrichtung 13 angeordnet. Mit ihr wird der verbleibende Schadstoffgehalt innerhalb des gereinigten Abgases 12 ermittelt. Dieser Meßvorrichtung 13 ist ein Kleinrechner 14 nachgeschaltet, dem die ermittelten Meßsignale zugeführt werden. Der Kleinrechner 14 steuert die Ventile 4,4AV,5V,6V,8V,9V,10V und 10AV, die den Vorratsbehältern für Sauerstoff, Stickstoff, Wasserstoff und Ammoniak vorgeschaltet sind. Durch den Kleinrechner 14 werden die Ventile in Abhängigkeit von der durch die Meßvorrichtung 13 ermittelten Schadstoffkonzentration so geregelt, daß der im gereinigten Abgas 12 verbleibende Schadstoffgehalt auf ein Minimum reduziert wird. Erfindungsgemäß kann der Plasmajet 1 an jeder beliebigen Stelle in den Abgaskanal, der bei dem hier dargestellten Ausführungsbeispiel durch den Kanal 3 reprästentiert wird, eingeleitet werden, da die lokalen Abgastemperaturen nur von sekundärer Bedeutung sind.

Die Plasmaquelle 2 wird mit reinen Gasen wie $N_2$,$O_2$,$H_2$,-$NH_3$ aus den Vorratsbehältern 4,4A,5 und 6 oder mit Gemischen aus diesen Gasen versorgt. Im Inneren der Plasmaquelle 2 herrscht eine Temperatur, die etwas unter 10000 °C liegt. Erfindungsgemäß wird eine Plasmaquelle 2 verwendet, die ein routierendes Plasma aufweist. Dies bedeutet, daß die Temperatur des Plasmajets 1 etwas mehr als 700 °C beträgt, und damit gegenüber der Temperatur in der Plasmaquelle 2 als kalt zu bezeichnen ist. Diesem Plasmajet 1 werden über die Ringdüse 7 entweder reine Gase wie Stickstoff, Sauerstoff, Wasserstoff und/oder Ammoniak oder Gasgemische bestehend aus zwei oder mehreren dieser Gase zugeführt.

Auf diese Weise lassen sich Radikale der Form $NH_x$ und $O_xH_y$ erzeugen, die in effizienten Reaktionen die Schadstoffkonzentration in dem zu reinigenden Abgas reduzieren bzw. oxidieren.

Einem reinen $N_2$-Plasmajet kann über die Ringdüse 7 Wasserstoff zugeführt werden. Ein Teil des erforderlichen $H_2$ kann auch unmittelbar in die Plasmaquelle 2 in Form eines $N_2/H_2$-Gasgemisches eingespeist werden. Die dann im Plasmajet 1 entstehenden $NH_2$-Radikale reduzieren wie in der nachfolgenden Gleichung dargestellt Stickstoffmonoxid in molekularen Stickstoff und Wasserdampf.

$$NH_2 + NO \qquad N_2 + H_2O$$

Für diese Reaktion ist kein Katalysator erforderlich. Durch geeignete Steuerung der Gasströme und der Plasmaentladung kann die obige Reaktion auf das momentane $NO_x$-Angebot aus dem Verbrennungsraum abgestimmt werden, so daß keine zusätzlichen Schadstoffe wie in $NH_3$ den Abgaskanal verlassen.

Die Radikale des $H_2$-$O_2$-Systems der Form $OH, HO_2, H_2, O_2$ können beispielsweise in einem $H_2$-Plasmajet erzeugt werden, dem über die Ringdüse $O_2$ zugeführt wird.

Die Erfindung ist nicht auf die oben beschriebene Ausführungsform beschränkt. Vielmehr besteht die Möglichkeit, an Stelle eines Plasmajets 1 eine Vielzahl solcher Jets für die Reaktion mit dem zu reinigenden Abgas einzusetzen.

## Patentansprüche

1. Verfahren zum Reinigen von $NO_x$- und $SO_2$-haltigen Abgasen aus Verbrennungsmotoren oder -anlagen, dadurch gekennzeichnet, daß die Schadstoffkonzentration ermittelt und in Abhängigkeit von der Größe dieser Meßwerte $H_2$,$N_2$,$O_2$ und/oder $NH_3$ einem Plasmajet (1) zugeführt werden, der anschließend mit dem zu reinigenden Abgas (11) zur Reaktion gebracht wird.

2. Verfahren nach Anspruch 1, dadurch gekennzeichnet, daß der Plasmajet (1) in einer Plasmaquelle (2) erzeugt wird, der in Abhängigkeit von der ermittelten Schadstoffkonzentration $H_2$,$N_2$,$O_2$ und/oder $NH_3$ einzeln oder in Form von Gemischen zugeführt wird.

3. Verfahren nach einem der Ansprüche 1 oder 2, dadurch gekennzeichnet, daß die im gereinigten Abgas (12) verbleibende Schadstoffkonzentration ermittelt und in Abhängigkeit von der Größe dieser Meßwerte der Plasmaquelle (2) und dem Plasmajet (1) $H_2$,$N_2$,$O_2$ und/oder $NH_3$ einzeln oder in Gemischen zugeführt werden.

4. Verfahren nach einem der Ansprüche 1 bis 3, dadurch gekennzeichnet, daß eine Plasmaquelle (2) mit einem routierenden Plasma verwendet wird.

5. Vorrichtung insbesondere zur Durchführung des Verfahrens nach Anspruch 1, dadurch gekennzeichnet, daß mindestens eine Plasmaquelle (2) vorgesehen ist, der in Strömungsrichtung des Plasmajets (1) gesehen, wenigstens eine Ringdüse (7) nachgeschaltet ist, deren Austrittsöffnung mit dem Innenraum eines Kanals (3) in Verbindung steht, in dem das zu reinigende Abgas (11) geführt ist.

6. Vorrichtung nach Anspruch 5, dadurch gekennzeichnet, daß die Ringdüse über mindestens eine Zuleitung (7Z) und Ventile (8V,9V,10V und 10AV) mit Vorratsbehältern (8,9,10,10A) für $H_2$,$N_2$,$O_2$ und $NH_3$ in Verbindung steht.

7. Vorrichtung nach Anspruch 5 oder 6, dadurch gekennzeichnet, daß die Plasmaquelle (2) über Ventile (4V,4AV,5V,6V) und Zuleitungen (2Z) an Vorratsbehälter (4,4A,5 und 6) für $H_2$,$N_2$,$O_2$ und $NH_3$ angeschlossen ist.

8. Vorrichtung nach einem der Ansprüche 5 bis 7, dadurch gekennzeichnet, daß hinter der Reaktionszone (R) des Plasmajets (1) eine Meßvorrichtung (13) zur Ermittlung der im gereinigten Abgas (12) verbleibenden Schadstoffkonzentration vorgesehen ist, und daß der Meßvorrichtung (13) ein Kleinrechner (14) nachgeschaltet ist, welcher steuernd mit den Ventilen (4V,4AV,5V,6V,8V,9-V,10V und 10AV) in Verbindung steht.

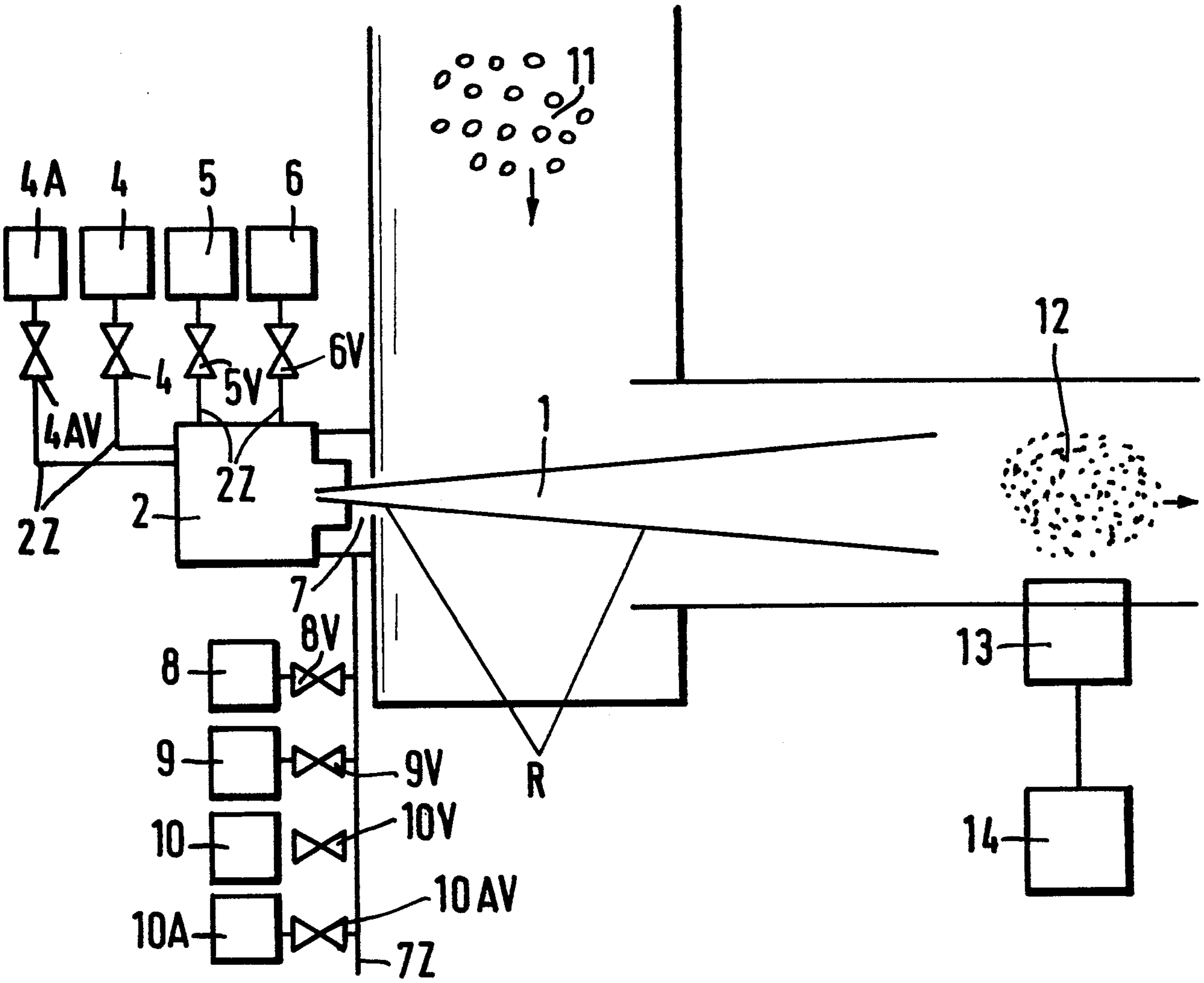
4A
4
5
6
6V
4
5V
4AV
2Z
2Z
2
1
11
12
7
8V
8
9
9V
10
10V
10A
10 AV
7Z
R
13
14

Europäisches Patentamt

0191330

## EUROPÄISCHER RECHERCHENBERICHT

Nummer der Anmeldung

EP 86 10 0857

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | FR-A-2 376 818 (HOECHST AG)<br>* Insgesamt *<br>----- | 1-3 | B 01 D 53/34<br>B 01 J 12/00<br>F 01 N 3/10 |
| | | | RECHERCHIERTE SACHGEBIETE (Int. Cl.4) |
| | | | B 01 D<br>B 01 J<br>F 01 N<br>H 05 H |

Der vorliegende Recherchenbericht wurde für alle Patentansprüche erstellt.

| Recherchenort | Abschlußdatum der Recherche | Prüfer |
|---|---|---|
| DEN HAAG | 16-05-1986 | PYFFEROEN K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82